# EUROPÄISCHE PATENTSCHRIFT

(11) **EP 3 330 083 B1**
(45) Veröffentlichungstag und Bekanntmachung des Hinweises auf die Patenterteilung: **11.09.2019**
(21) Anmeldenummer: 17001942.6
(22) Anmeldetag: 28.11.2017
(51) Int. Cl.: B41C 1/00, B41N 1/06

(54) **HERSTELLVERFAHREN FÜR STICHTIEFDRUCKPLATTEN SOWIE MATRIZE ZUM HERSTELLEN EINER STICHTIEFDRUCKPLATTE**
METHOD FOR THE PRODUCTION OF INTAGLIO PRINTING PLATES AND MATRICE FOR THE PRODUCTION OF AN INTAGLIO PRINTING PLATE
PROCÉDÉ DE FABRICATION DE PLAQUES D'IMPRESSION TAILLE DOUCE AINSI QUE MATRICE POUR LA FABRICATION D'UNE PLAQUE D'IMPRESSION TAILLE DOUCE

(30) Priorität: 30.11.2016 DE 102016014229
(43) Veröffentlichungstag der Anmeldung: 06.06.2018
(73) Patentinhaber: Giesecke+Devrient Currency Technology GmbH, 81677 München (DE)
(72) Erfinder: Freutsmiedl, Simon, 83627 Warngau (DE); Otto, Daniela, 81669 München (DE); Franz, Peter, 85567 Pienzenau/Bruck (DE); Keck-Angerer, Angelika, 80797 München (DE)

(56) Entgegenhaltungen:
- EP-A1- 2 886 367
- WO-A1-03/057494
- WO-A1-2016/185720
- DE-A1- 10 159 084

## Beschreibung

Die Erfindung bezieht sich auf ein Verfahren zum Herstellen einer ein Druckbild enthaltenden Druckplatte für den Stichtiefdruck sowie eine entsprechende Matrize.

In der Drucktechnik ist der Stichtiefdruck zur Herstellung qualitativ hochwertiger Drucke bekannt. Er wird insbesondere zum Druck von Banknoten eingesetzt. Das Druckverfahren eignet sich für sehr feine, kleine Darstellungen. Die Druckverfahren sind auch zum Erzeugen von taktilen Motiven geeignet. Der reliefartige, hohe Farbauftrag in Kombination mit den feinen Strukturen dient bei Banknoten als Sicherheitsmerkmal, welches ertastet werden kann. Weitere Bezeichnungen für den Stichtiefdruck sind Stahlstich, Stichdruck, Stahlstichdruck oder Intaglio-Druck.

Die für den Stichtiefdruck verwendete Druckplatte enthält an den Stellen, an denen Farbe aufgetragen werden soll, Vertiefungen. Gemäß WO 97/48555 A1 wird eine Druckplatte für einen Stichtiefdruck dadurch hergestellt, dass in ein Master die erforderlichen Strukturen eingefräst werden. Auf diese Weise wird die Struktur, welche im späteren Druckprozess die Farbe aufnimmt, gebildet. Der Master wird mittels eines galvanischen Prozesses in eine Matrize umgesetzt. Die Matrize enthält ein Negativbild, d.h. an denjenigen Stellen, an denen im Master Vertiefungen sind, hat die Matrize erhöhte Strukturen und umgekehrt. Von der Matrize wird dann die Druckplatte beispielsweise ebenfalls durch einen galvanischen Prozess vervielfältigt.

Im Stand der Technik sind 3D-Druckprozesse bekannt, beispielsweise aus der DE 102014221480 A1, DE 102014215439 A1 oder DE 102011012484 A1. Die Verwendung von 3D-Druck ist für die Herstellung von Sieben für Wasserzeichenpapier bekannt, beispielsweise aus der EP 2954998 A1. Die WO 2016/042482 A2 verwendet 3D-Druckprozesse zum Herstellen einer Farbzuführrolle einer Druckmaschine.

DE 101 59 084 A1 schlägt vor die Erhebungen einer Hoch- oder Tiefdruckplatte mittels 3D-Druck zu erzeugen. Analog verfährt EP 2886 367 A1 für Druckklischees. In WO 2016/185720 A1 wird eine Vorform zur Abformung einer Druckform durch 3D-Druck erstellt.

Die Herstellung der Druckplatten für den Stichtiefdruck ist relativ aufwendig und zeitraubend. Dies ist insbesondere dann von Nachteil, wenn sich in einzelnen Bereichen des Druckbildes eine Änderung ergibt. Solche Bereiche liegen bei Banknoten in Form einer im Druckbild enthaltenen Jahreszahl oder in Form von Unterschriften verantwortlicher Personen vor, die wechseln können.

Der Erfindung liegt deshalb die Aufgabe zugrunde, ein Verfahren zur Herstellung einer Druckplatte für den Stichtiefdruck und eine entsprechende Matrize anzugeben, so dass der Herstellaufwand und insbesondere die Herstelldauer reduziert ist.

Die Erfindung ist in den unabhängigen Ansprüchen definiert. Die abhängigen Ansprüche beziehen sich auf vorteilhafte Weiterbildungen.

Bei einem Verfahren zum Herstellen einer ein Druckbild enthaltenden Druckplatte für den Stichtiefdruck wird ein 3D-Druckprozess verwendet. Dies kann entweder durch 3D-Druck von mindestens Bereichen einer Matrize, aus welcher die Druckplatte abgeformt wird, oder durch 3D-Druck von mindestens Teilen eines Masters, aus dem eine Matrize zum späteren Vervielfältigen der Druckplatte erzeugt wird, geschehen.

Im Herstellverfahren wird die Druckplatte für den Stichtiefdruck unter Verwendung eines 3D-Druckprozesses erzeugt. Dies umfasst den Master, welcher das Negativ des Druckbildes trägt, und/ oder die Matrize, welche das Druckbild trägt und von der die Druckplatte durch Vervielfältigung abgeformt wird, unter Verwendung eines 3D-Druckprozesses zu erzeugen oder um Zusatzdruckinformation zu ergänzen. Letzteres hat den Vorteil, dass die mechanischen Anforderungen an das Resultat des 3D-Druckprozesses verringert sind. Den gleichen Vorteil realisiert eine Variante, die den Master durch einen 3D-Druckprozess erzeugt und nicht mehr fräst.

In einer besonders bevorzugten Ausgestaltung wird auf Master und/ oder Matrize lediglich Zusatzdruckinformation, beispielsweise eine Jahreszahl oder eine Unterschrift, durch den 3D-Druckprozess gedruckt und das restliche Druckbild wird anderweitig, beispielsweise durch Fräsen (im Fall des Master) oder einen galvanischen Abformprozess von einem Master (im Fall der Matrize), der dann die Zusatzdruckinformation nicht enthält, gefertigt. Auf diese Weise ist es vermieden, dass stets ein neuer Master zur Gänze gefräst werden muss, wenn sich nur die Zusatzdruckinformation ändert. Der Master enthält nur noch das Druckbild ohne die Zusatzdruckinformation, also diejenigen Bestandteile, die beispielsweise für alle Serien einer Banknote unverändert bleiben. Eine Zusatzdruckinformation kann auch als eine maximal jährlich, vorzugsweise mehrjährig, variierende Information bezeichnet werden.

Die Verwendung des 3D-Druckprozesses zum vollständigen oder teilweisen Herstellen des Masters oder zum teilweisen Herstellen der Matrize hat den Vorteil, dass die mechanischen Anforderungen an die Strukturen des 3D-Druckes geringer sind und nur auf den Abformprozess, der sehr viel seltener stattfindet als der eigentliche Druckprozess, ausgelegt werden müssen. Insbesondere können einzelne Strukturen auf einer konventionell hergestellten Matrize (z.B. einer Messing- oder Nickel-Platte) mit einem geeigneten 3D-Druckprozess aufgebracht werden, insbesondere Zusatzdruckinformationen, die sich bei Nachproduktionen ändern können. Prinzipiell können verschiedene oder in Kombination auch mehrere verschiedene 3D-Druckprozesse zum Einsatz kommen. In Frage kommen (Mikro-) Stereolithographie (STL), Polymerdrucken, Fused Deposition Modelling (FDM), selektives Lasersintern (SLS) und selektives Laserschmelzen (SLM), um die Druckplatte selbst oder einen Master oder Zusatzdruckinformationen am Master oder eine Matrize oder Zusatzdruckinformationen an der Matrize zu erzeugen. Besonders bevorzugt wird im Verfahren die Multiphotonen-Lithographie verwendet, wie sie beispielsweise mit dem 3D-Drucker "Photonic Professional GT" der Nanoscribe GmbH umgesetzt wird. Die Technologie dieses 3D-Druckprozesses ist in der DE 10201112484 A1 und dort im Absatz 35 beschrieben. Der bevorzugt beim 3D-Druckprozess gedruckte "Photolack" ist in der DE 102014221480 A1 und dort im Absatz 19 beschrieben.

Die Ausgestaltung, dergemäß der 3D-Druckprozess nur die Zusatzdruckinformation druckt (auf den Master oder die Matrize) und der Rest des Druckbildes anderweitig, insbesondere durch herkömmliche galvanische Abformprozesse oder Fräsprozesse bereitgestellt wird, ist insbesondere von Vorteil, da die Bauraumgröße des 3D-Druckprozesses nicht so ausgelegt werden muss, dass damit der gesamte Master oder die gesamte Matrize oder die gesamte Druckplatte hergestellt wird. Die Beschränkung auf das 3D-Drucken der Zusatzdruckinformation erlaubt zudem eine Fertigungsgeschwindigkeit, die auf hohe Auflösung abgestimmt ist. Es muss nur ein Teil, z.B. ein kleiner Bereich des gesamten Druckbildes, nämlich der der Zusatzdruckinformation, bedruckt werden. Ein weiterer Vorteil besteht darin, dass keine Abhängigkeit von der Form eines Fräsers besteht, der beispielsweise hinsichtlich der Flankensteilheit eingeschränkt ist. Die Gestaltung der Strukturen im Master, der Matrize und/oder der Druckplatte ist damit flexibler.

Die Erfindung wird nachfolgend unter Bezugnahme auf die Zeichnungen beispielshaft näher erläutert. In den Zeichnungen zeigt:
Fig. 1 ein Ablaufdiagram eines Verfahrens zur Herstellung einer Druckplatte für den Stichtiefdruck und
Fig. 2 eine Schemadarstellung einer Matrize zur Herstellung einer Druckplatte.

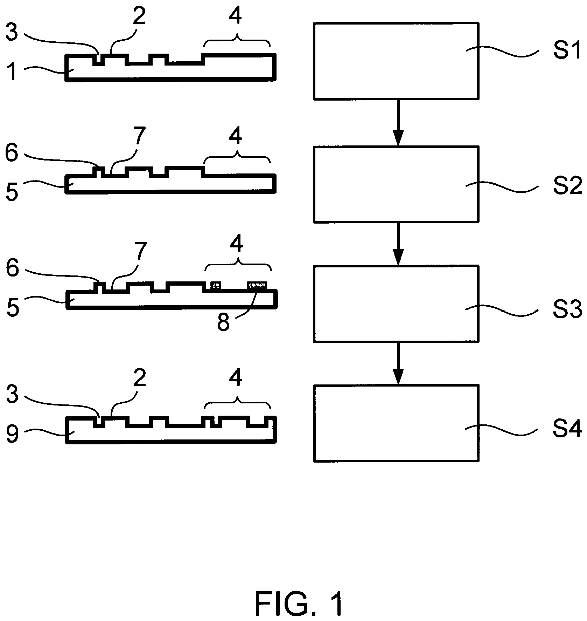

Fig. 1 zeigt vier Schritte S1 bis S4 eines Verfahrens zur Herstellung einer Druckplatte für den Stichtiefdruck. Dabei zeigt Fig. 1 rechts schematisch das Ablaufdiagramm des Verfahrens und links die dazugehörigen Stufen der erzeugten Elemente. In einem Schritt S1 wird ein im Wesentlichen zum späteren Druck negativer Master 1, z.B. aus einer Stahlplatte hergestellt, beispielsweise durch Fräsen. Bei der Herstellung werden in eine Oberfläche 2 Vertiefungen 3 eingefräst, die an denjenigen Stellen liegen, an denen später im Druckbild Farbe auf eine Banknote aufgetragen werden soll. In einem Bereich 4 erfolgt vorliegend keine Fräsung. In diesem Bereich wird später Zusatzdruckinformation hinzugefügt werden, beispielsweise die Unterschrift eines Präsidenten der jeweiligen Notenbanken oder des jeweiligen Staatspräsidenten sowie eine Jahreszahl des Banknotendrucks. Da sich diese Angaben ändern können und dann bei einer Nachproduktion einer Banknotenserie folglich nicht mehr gültig wären, werden sie bei der Herstellung des Masters 1 im Schritt S1 nicht in die Stahlplatte eingefräst, d.h. der Bereich 4 bleibt frei.

Anschließend wird vom Master 1 in einem Schritt S2 galvanisch eine Matrize 5 auf einen Träger abgeformt. Diese hat an ihrer Oberseite bereichsweise bereits das Druckbild, trägt also an Stellen, an denen am Master 1 Vertiefungen 3 vorgesehen sind, nun erhabene Stellen 6 und an Stellen, an denen in die Oberfläche 2 im Schritt S1 in die Stahlplatte keine Vertiefungen eingefräst wurden, Vertiefungen 7. Im Bereich 4, welcher bei der Herstellung des Masters 1 im Schritt S1 unbearbeitet blieb, hat folglicherweise die Matrize 5 eine Vertiefung.

Anschließend wird an der Matrize 5 im Schritt S3 die Zusatzinformation im Bereich 4 durch einen 3D-Druckprozess, beispielsweise mittels der eingangs genannten 3D-Druckmaschine hinzugefügt. Im Bereich 4 wird somit entsprechend der gewünschten Zusatzdruckinformation, beispielsweise gemäß der gewünschten Unterschrift und/oder Jahreszahl, eine 3D-Druckstruktur 8 als erhabene Struktur ausgebildet.

Von der derart um die Zusatzdruckinformation (als Negativbild) ergänzten Matrize 5 wird dann im Schritt S4 die Druckplatte 9 durch galvanische Abformung vervielfältigt. Fig. 1 zeigt schematisch nur eine einzige Druckplatte und Matrize. Bekanntermaßen wird beim Banknotendruck eine Vielzahl von identischen Druckplatten erzeugt, um mit einem Druckschritt mehrere Banknoten zu drucken. Die Matrize 5 kann insbesondere mehrere Nutzen enthalten und/ oder zur Erstellung einer Druckplatte 9 mit mehreren Nutzen dienen.

Die Druckplatte 9 unterscheidet sich vom Master 1 durch die Zusatzdruckinformation im Bereich 4. Ansonsten entspricht das Druckbild, welches die Druckplatte 9 aufweist, dem des Masters 1, d.h. dem im Schritt S1 in die Stahlplatte eingefrästen Druckbild.

Das Herstellverfahren mit den Schritten S1 bis S4 erlaubt es sehr einfach, die Zusatzdruckinformation im Bereich 4 zu aktualisieren. Dazu wird von der Matrize 5 die 3D-Druckstruktur 8 entfernt und in der gewünschten Form neu aufgedruckt. Von der derart geänderten Matrize 5 werden wiederum Druckplatten 9 abgeformt, d.h. die Schritte S3 und S4 werden nach Entfernen und neuem Aufdrucken der 3D-Druckstruktur 8 mit der wie gewünscht aktualisierten Zusatzdruckinformation nochmals durchlaufen. Die zeitaufwendigen und kostenträchtigen Schritte S1 und S2 müssen hingegen nicht noch einmal ausgeführt werden.

In einem alternativen Ablauf wird eine vorhandene Matrize 5, die herkömmlich hergestellt wurde, also insbesondere aus einem Master, der auch im Bereich 4 Information enthält, verwendet. Aus der vorhandenen Matrize 5 werden die vom Druckbild inhaltlich abweichenden Informationen im Bereich 4 entfernt, um das Verfahren mit den Schritten S3 und S4 fortsetzen zu können. Die vorhandene Matrize 5 wurde zuvor bereits zur Erstellung einer Druckplatte verwendet, die insbesondere bereits zum Drucken verwendet wurden. Eine Neuerstellung des Masters mit seinen abweichenden, gegebenenfalls veralteten Zusatzinformationen kann auf diesem Weg ebenso vermieden werden.

Die Oberfläche einer Druckplatte 9 wird - in einem nicht gezeigten, in allen Ausgestaltungen möglichen und optionalen Schritt - gehärtet, insbesondere chemisch oder thermisch.

Ebenso für alle vorhergehenden und folgenden Ausgestaltungen ist Folgendes anwendbar. Bevorzugt wird leitfähiges Material mit dem 3D-Druckprozess aufgebracht. Insbesondere falls das mit dem 3D-Druckprozess aufgebrachte Material nicht-leitend oder zu schlecht leitend ist, wird vor einem galvanischen Abformen eine leitfähige Schicht aufgebracht. Die leitfähige Schicht wird zumindest auf das mit dem 3D-Druckprozess aufgebrachte Material aufgebracht.

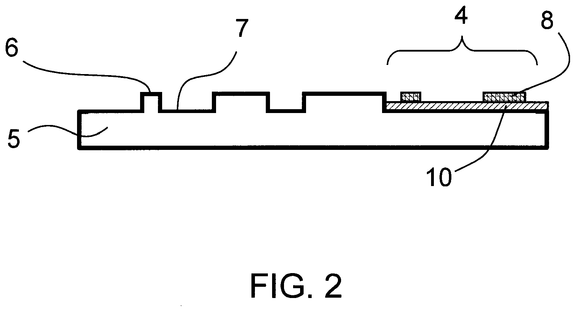

Fig. 2 zeigt eine optionale Ausgestaltung der Matrize 5, auf die in einem Zwischenschritt nach dem Schritt S4 im Bereich 4 eine Zwischenschicht aufgebracht wurde, bevor im Schritt S3 im Bereich 4 die Zusatzdruckinformation in Form der 3D-Druckstruktur 8 aufgedruckt wird. Die Zwischenschicht ist bevorzugt eine Trennschicht 10, die es erlaubt die 3D-Druckstruktur 8 von der Matrize 5 besonders einfach zu lösen. Die Trennschicht 10 kann für den 3D-Druckvorgang als haftvermittelnde Schicht dienen. Die Zwischenschicht kann alternativ nur als haftvermittelnde Schicht für den 3D-Druckvorgang dienen. Nicht figürlich dargestellt ist wiederum, dass zumindest auf der 3D-Druckstruktur 8 eine leitfähige Schicht aufgebracht werden kann, welche ein galvanisches Abformen unterstützt. Insbesondere falls die (Zusatz- bzw.) Trennschicht 10 nicht-leitend ist, wird die leitfähige Schicht - nach Schritt S3 - im Bereich 4 vollflächig aufgebracht.

Da mit dem 3D-Druckprozess nur die Zusatzdruckinformation erzeugt werden muss, ist der zeitliche Aufwand der Herstellung neuer Druckplatten bei geänderter Zusatzdruckinformation deutlich reduziert. Trägt eine Matrize beispielsweise 45 Nutzen, beträgt bei einer 3D-Druckgeschwindigkeit von 10 mm Höhe pro Stunde die erforderliche Herstellzeit für eine Unterschrift mit einer Höhe von 50 µm nur 18 Sekunden für die Einzelmatrize und 13 ½ Minuten für die gesamte Matrize mit den 45 Nutzen.

In einer abgewandelten Ausführungsform wird mit dem 3D-Druckprozess gleich die Matrize 5 vollständig gefertigt. Auf einen (unstrukturierten) Träger wird das ganze Negativ des Druckbildes aufgedruckt. Die 3D-Druckdauer ist zwar dann verlängert, jedoch entfallen die Schritte S1 und S2.

In einer ebenfalls möglichen Ausführungsform wird beim Herstellen des Masters 1 im Schritt S1 der Bereich 4 vollständig gefräst, d.h. als Vertiefung ausgebildet. Dann wird dort mittels 3D-Druck die Zusatzdruckinformation hergestellt - aufgrund der Arbeit am Master 1 natürlich als Positiv. Anschließend werden die Schritte S2 und S4 durchgeführt. Eine Aktualisierung der Zusatzdruckinformation erfolgt dann am Master 1 durch Entfernen des alten 3D-Druckes und Neudruck.

### Bezugszeichenliste

- S1 - S4: Schritt
- 1: Master
- 2: Oberfläche
- 3, 7: Vertiefung
- 4: Bereich
- 5: Matrize
- 6: erhabene Stelle
- 8: 3D-Druckstruktur
- 9: Druckplatte
- 10: Trennschicht

## Patentansprüche

1. Verfahren zum Herstellen einer ein Druckbild enthaltenden Druckplatte (9), wobei das Druckbild der Druckplatte (9) unter Verwendung eines 3D-Druckprozesses erzeugt wird, **dadurch gekennzeichnet, dass**
die Druckplatte (9) eine Druckplatte für den Stichtiefdruck ist,
die Druckplatte (9) von einer Matrize (5) abgeformt wird, die das Negativ des Druckbildes trägt, wobei das Negativ des Druckbildes bereichsweise mit dem 3D-Druckprozess auf die Matrize (5) aufgedruckt wird, und die Matrize (5) durch galvanisches Abformen aus einem Master (1) erstellt worden ist.

2. Verfahren nach Anspruch 1 **dadurch gekennzeichnet, dass**
das Negativ des Druckbildes in einem ersten Bereich fehlt und mit dem 3D-Druckprozess aufgedruckt wird und in einem zweiten Bereich bereits vorliegt.

3. Verfahren nach Anspruch 2 **dadurch gekennzeichnet, dass**
das Negativ des Druckbildes in dem zweiten Bereich anderweitig, insbesondere durch den galvanischen Abformprozess, erzeugt wird.

4. Verfahren nach einem der Ansprüche 1 bis 3, **dadurch gekennzeichnet, dass** vor dem 3D-Druckprozess ein vorhandenes Negativ eines abweichenden Druckbildes zumindest bereichsweise von der Matrize entfernt wird, vorzugsweise mittels Fräsen.

5. Verfahren nach Anspruch 1, **dadurch gekennzeichnet, dass** der Master in dem ersten Bereich nicht strukturiert ist und nur in dem zweiten Bereich das Druckbild trägt, damit in dem ersten Bereich das Druckbild durch den 3D-Druckprozess, insbesondere mit Zusatzdruckinformationen, auf der Matrize (5) ergänzt werden kann.

6. Verfahren nach einem der vorhergehenden Ansprüche, **dadurch gekennzeichnet, dass** das Verfahren vor dem 3D-Druckprozess ferner einen oder mehrere der vorgelagerten Schritte umfasst:
- Herstellen des Masters (1),
- Abformen der Matrize (5) von dem Master (1), wobei die Matrize insbesondere ein Negativ eines abweichenden Druckbildes umfasst,
- Abformen einer Druckplatte mit einem abweichenden Druckbild von der Matrize (5),
- Verwenden der Druckplatte mit dem abweichenden Druckbild.

7. Verfahren zum Herstellen einer ein Druckbild enthaltenden Druckplatte (9),
wobei das Druckbild der Druckplatte (9) unter Verwendung eines 3D-Druckprozesses erzeugt wird, **dadurch gekennzeichnet, dass**
die Druckplatte eine Druckplatte für den Stichtiefdruck ist,
ein Master (1) mit dem Druckbild unter Verwendung des 3D-Druckprozesses gefertigt wird, von dem Master (1) eine Matrize (5) abgeformt und hiermit die Druckplatte (9) hergestellt wird.

8. Verfahren nach Anspruch 7, **dadurch gekennzeichnet, dass** in den Master (1) ein Druckbild negativ gefräst wird, dass in einem Bereich (4) in den Master (1) flächig gefräst wird und dass in diesem Bereich (4) Zusatzdruckinformation mittels des 3D-Druckprozesses aufgedruckt wird.

9. Verfahren nach einem der obigen Ansprüche, **dadurch gekennzeichnet, dass** die Druckplatte (9) zum Drucken von Banknoten dient und das Druckbild eine Zusatzdruckinformation, insbesondere in Form einer Jahreszahl oder einer Unterschrift, umfasst.

10. Matrize zum Herstellen einer Stichtiefdruckplatte, wobei die Matrize (5) dazu ausgebildet ist, von ihr die Druckplatte (9) abzuformen, wobei die Matrize (5) in einem Abformprozess aus einem Master (1) hergestellt wurde, **dadurch gekennzeichnet, dass** auf einen Träger der Matrize (5) in einem Bereich des Druckbildes mittels eines 3D-Druckprozesses in Negativform Zusatzdruckinformation gedruckt ist, die Bestandteil des Druckbildes ist.

11. Matrize nach Anspruch 10, **dadurch gekennzeichnet, dass** der Träger im Bereich (4) der Zusatzdruckinformation eine Zusatzschicht aufweist, insbesondere eine Trennschicht (10) zum Ablösen des mit dem 3D-Druckprozess auf die Trennschicht (10) aufgebrachten Materials (8) und/oder eine leitfähige Schicht zumindest auf dem mit dem 3D-Druckprozess aufgebrachten Material (8).

## Claims

1. A method for manufacturing a printing plate (9) containing a print image, wherein the print image of the printing plate (9) is generated while employing a 3D-printingprocess, **characterized in that**
the printing plate (9) is a printing plate for intaglio printing,
the printing plate (9) is cast from a matrix (5) which carries the negative of the print image, wherein the negative of the print image is imprinted regionally on the matrix (5) using the 3D-printing process, and
the matrix (5) has been created by galvanic casting from a master (1).

2. The method according to claim 1, **characterized in that** the negative of the print image is absent in the first region and is imprinted using the 3D-printing process and is already present in the second region.

3. The method according to claim 2, **characterized in that** the negative of the print image is generated in the second region in another way, in particular by the galvanic casting process.

4. The method according to any of claims 1 to 3, **characterized in that** prior to the 3D-printing process a present negative of a deviating print image is removed from the matrix at least regionally, preferably by means of milling.

5. The method according to claim 1, **characterized in that** the master is not structured in the first region and carries the print image only in the second region, so that in the first region the print image can be supplemented on the matrix (5) by the 3D-printing process, in particular with additional print information items.

6. The method according to any of the preceding claims, **characterized in that** prior to the 3D-printing process the method comprises one or several of the upstream steps:
- manufacture of the master (1),
- casting the matrix (5) of the master (1), wherein the matrix comprises in particular a negative of a deviating print image,
- casting a printing plate having a deviating print image of the matrix (5),
- employing the printing plate having the deviating print image.

7. A method for manufacturing a printing plate (9) containing a print image, wherein the print image of the printing plate (9) is generated while employing a 3D-printing process, **characterized in that**
the printing plate is a printing plate for intaglio printing,
a master (1) having the print image is fabricated while employing the 3D-printing process, a matrix (5) is cast from the master (1) and the printing plate (9) is hereby manufactured.

8. The method according to claim 7, **characterized in that** a print image is milled negatively into the master (1), that there is milled into the master (1) planarly in a region (4) and that in this region (4) an additional print information item is imprinted by means of the 3D-printing process.

9. A method according to any of the above claims, **characterized in that** the printing plate (9) serves for printing bank notes and the print image comprises an additional print information item, in particular in the form of a year date or a signature.

10. A matrix for manufacturing an intaglio printing plate, wherein the matrix (5) is configured for casting the printing plate (9) from it, wherein the matrix (5) was manufactured from a master (1) in a casting process, **characterized in that** on a carrier of the matrix (5) in a region of the print image there is printed by means of a 3D-printing process in negative form an additional print information item which is a component of the print image.

11. A matrix according to claim 10, **characterized in that** the carrier has in the region (4) of the additional print information item an additional layer, in particular a separation layer (10) for detaching the material (8) applied to the separation layer (10) by the 3D-printing process and/or a conductive layer at least on the material applied with the 3D-printing process (8).

## Revendications

1. Procédé de fabrication d'une plaque d'impression (9) comportant une image d'impression, l'image d'impression de la plaque d'impression (9) étant générée en employant un processus d'impression 3D, **caractérisé en ce que**
la plaque d'impression (9) est une plaque d'impression pour l'impression en creux par gravure,
la plaque d'impression (9) est modelée par une matrice (5) qui porte le négatif de l'image d'impression, cependant que le négatif de l'image d'impression est imprimé en certaines zones sur la matrice (5) avec le processus d'impression 3D, et
la matrice (5) est créée par modelage galvanique à partir d'un maître (1).

2. Procédé selon la revendication 1, **caractérisé en ce que** le négatif de l'image d'impression est absent dans une première zone et est imprimé avec le processus d'impression 3D, et est déjà présent dans une deuxième zone.

3. Procédé selon la revendication 2, **caractérisé en ce que** le négatif de l'image d'impression est, dans la deuxième zone, généré autrement, en particulier par le processus galvanique de modelage.

4. Procédé selon une des revendications de 1 à 3, **caractérisé en ce que**, avant le processus d'impression 3D, un négatif existant d'une image d'impression divergente est enlevée au moins en certains endroits de la matrice, de préférence par fraisage.

5. Procédé selon la revendication1, **caractérisé en ce que** le maître n'est pas structuré dans la première zone et ne porte que dans la deuxième zone l'image d'impression afin que, dans la première zone, l'image d'impression puisse être complétée sur la matrice (5) par le processus d'impression 3D, en particulier par des informations imprimées supplémentaires.

6. Procédé selon une des revendications précédentes, **caractérisé en ce que** le procédé comprend, avant le processus d'impression 3D, en outre une ou plusieurs des étapes en amont :
- fabrication du maître (1),
- modelage de la matrice (5) par le maître (1), cependant que la matrice comprend en particulier un négatif d'une image d'impression divergente,
- modelage d'une plaque d'impression avec une image d'impression divergente par la matrice (5),
- utilisation de la plaque d'impression avec l'image d'impression divergente.

7. Procédé de fabrication d'une plaque d'impression (9) comportant une image d'impression, l'image d'impression de la plaque d'impression (9) étant générée en employant un processus d'impression 3D, **caractérisé en ce que**
la plaque d'impression est une plaque d'impression pour l'impression en creux par gravure,
un maître (1) ayant l'image d'impression est confectionné en employant le processus d'impression 3D, une matrice (5) est modelée par le maître (1) et qu'avec cela la plaque d'impression (9) est fabriquée.

8. Procédé selon la revendication 7, **caractérisé en ce que**, dans le maître (1), une image d'impression est fraisée en négatif, que, dans une zone (4) dans le maître (1), le fraisage est effectué de manière plane, et que, dans cette zone (4), une information imprimée supplémentaire est imprimée au moyen du processus d'impression 3D.

9. Procédé selon une des revendications précédentes, **caractérisé en ce que** la plaque d'impression (9) sert à l'impression de billets de banque et que l'image d'impression comprend une information imprimée supplémentaire, en particulier sous forme d'un chiffre d'année ou d'une signature.

10. Matrice destinée à la fabrication d'une plaque d'impression en creux par gravure, cependant que la matrice (5) est conçue pour modeler par elle la plaque d'impression (9), cependant que la matrice (5) a été fabriquée lors d'un processus de modelage à partir d'un maître (1), **caractérisée en ce que**, sur un support de la matrice (5), dans une zone de l'image d'impression, au moyen d'un processus d'impression 3D sous forme négative, une information imprimée supplémentaire est imprimée, laquelle fait partie de l'image d'impression.

11. Matrice selon la revendication 10, **caractérisé en ce que** le support comporte dans la zone (4) de l'information imprimée supplémentaire une couche supplémentaire, en particulier une couche de séparation (10), pour le détachement du matériau (8) appliqué sur la couche de séparation (10) avec le processus d'impression 3D et/ou une couche conductrice au moins sur le matériau (8) appliqué avec le processus d'impression 3D.
